# FASCICULE DE BREVET EUROPEEN

(11) **EP 4 161 993 B1**
(45) Date de publication et mention de la délivrance du brevet: **29.04.2026**
(21) Numéro de dépôt: 21739160.6
(22) Date de dépôt: 03.06.2021
(51) Int. Cl.: C08L 9/06, C08J 3/22, C08L 15/00, C08K 3/36, B60C 1/00

(54) **COMPOSITION DE CAOUTCHOUC**
KAUTSCHUKZUSAMMENSETZUNG
RUBBER COMPOSITION

(30) Priorité: 04.06.2020 FR 2005857
(43) Date de publication de la demande: 12.04.2023
(73) Titulaire: COMPAGNIE GENERALE DES ETABLISSEMENTS MICHELIN, 63000 Clermont-Ferrand (FR)
(72) Inventeur: ARAUJO DA SILVA, José-Carlos, 63040 CLERMONT-FERRAND CEDEX 9 (FR); PRAS, Maxime, 63040 CLERMONT-FERRAND CEDEX 9 (FR); CEREDE, Benoit, 63040 CLERMONT-FERRAND Cedex 9 (FR); PERRIOT, Antoine, 63040 CLERMONT-FERRAND Cedex 9 (FR); DURIEZ, Simon, 63040 CLERMONT-FERRAND Cedex 9 (FR)
(74) Mandataire: M.F.P. Michelin
(86) Numéro de dépôt international: PCT/FR2021/051006
(87) Numéro de publication internationale: WO 2021/245358

(56) Documents cités:
- EP-A1- 3 406 664
- DE-T5- 112018 002 382
- JP-A- H0 827 313

## Description

Le domaine de la présente invention est celui des compositions de caoutchouc renforcées par une charge renforçante, notamment utilisées dans la confection de bandages pneumatiques ou non pneumatiques pour véhicules, plus particulièrement utilisées pour la fabrication de bandes de roulement.

Une bande de roulement pour un bandage pneumatique ou non pneumatique doit obéir de manière connue à un grand nombre d'exigences techniques souvent antinomiques, parmi lesquelles une faible résistance au roulement, une résistance élevée à l'usure, ainsi qu'une adhérence élevée sur sol mouillé.

Ce compromis de propriétés, en particulier du point de vue de la résistance au roulement et de la résistance à l'usure, a pu être amélioré ces dernières années sur les « pneus verts » à faible consommation d'énergie, destinés notamment aux véhicules tourisme, grâce notamment à l'emploi, comme bande de roulement, de nouvelles compositions de caoutchouc faiblement hystérétiques ayant pour caractéristique d'être renforcées majoritairement de charges inorganiques spécifiques qualifiées de renforçantes, notamment de silices hautement dispersibles dites « HDS » (« Highly Dispersible Silica »), capables de rivaliser, du point de vue du pouvoir renforçant, avec les noirs de carbone conventionnels de grade pneumatique. Toutefois, la présence d'un fort taux de silice dans ces compositions de caoutchouc n'est pas optimale pour la performance de l'adhérence sur sol mouillé du pneumatique ; cette adhérence étant plus faible que pour des compositions faiblement chargées.

Il est connu que l'adhérence d'un bandage pneumatique sur un sol mouillé s'effectue en augmentant la surface de contact de la bande de roulement sur le sol de roulage, notamment en utilisant un matériau déformable pour la bande de roulement, en l'espèce une composition de caoutchouc déformable. Une façon de rendre une composition de caoutchouc plus déformable est d'y ajouter une forte quantité de plastifiants. Cependant, une composition de caoutchouc très déformable présente l'inconvénient d'avoir un large potentiel hystérétique. Or, l'amélioration de la résistance au roulement suppose de baisser les pertes hystérétiques.

Ainsi, la composition de caoutchouc de la bande de roulement doit satisfaire à deux exigences antinomiques, à savoir présenter un potentiel d'hystérèse maximal pour satisfaire à l'exigence d'adhérence et présenter une hystérèse aussi faible que possible pour satisfaire à l'exigence de résistance au roulement. JP H08 27313 concerne une composition de caoutchouc pour une bande de roulement utilisée pour produire un pneu présentant un bon équilibre entre l'adhérence sur sol mouillé et une faible résistance au roulement sans nuire à la résistance à l'usure du pneu.

Un but de la présente invention est donc de proposer de nouvelles compositions de caoutchouc, en particulier pour des bandes de roulement, qui remédient notamment aux inconvénients précités ; présentant en particulier des propriétés d'hystérèse améliorées tout en conservant, voire améliorant, leur performance d'adhérence sur sol mouillé.

Ce but est atteint en ce que la Demanderesse vient de découvrir, d'une manière surprenante, qu'une combinaison spécifique d'élastomères diéniques présentant un différentiel de température de transition vitreuse défini permet de remédier aux inconvénients précités. En effet, lorsqu'une composition de caoutchouc comprend au moins un élastomère diénique E1 non-fonctionnalisé ayant une température de transition vitreuse TgE1 supérieure ou égale à -50°C, cet élastomère E1 étant présent à un taux compris dans un domaine allant de 50 pce à 70 pce et au moins un second élastomère diénique E2 fonctionnalisé présentant une température de transition vitreuse TgE2 satisfaisant la relation mathématique TgE2 ≤ TgE1 - 23°C ; alors cette composition est pourvue d'une excellente résistance au roulement tout en conservant une bonne adhérence sur sol mouillé.

Ainsi, un premier objet de la présente invention concerne une composition de caoutchouc à base d'au moins un premier élastomère diénique E1 non-fonctionnalisé ayant une température de transition vitreuse TgE1, un second élastomère diénique E2 fonctionnalisé présentant une température de transition vitreuse TgE2, une charge renforçante capable d'interagir avec l'élastomère diénique E2 fonctionnalisé et un système de réticulation, dans laquelle :
- la température de transition vitreuse TgE1 est supérieure ou égale à -50°C,
- la température de transition vitreuse TgE2 satisfait la relation mathématique TgE2 ≤ TgE1 - 23°C, et
- le taux de l'élastomère diénique E1 non fonctionnalisé est compris dans un domaine allant de 50 pce à 70 pce.

Avantageusement, la température de transition vitreuse TgE2 peut satisfaire la relation mathématique TgE2 ≤ TgE1 - 28°C, plus préférentiellement TgE2 ≤ TgE1 - 30°C.

Avantageusement, la température de transition vitreuse TgE2 peut satisfaire la relation mathématique TgE2 ≥ TgE1 - 65°C, plus préférentiellement TgE2 ≥ TgE1 - 50°C, plus préférentiellement encore TgE2 ≥ TgE1 - 45°C.

Avantageusement, la température de transition vitreuse TgE1 peut être comprise dans un domaine allant de -50°C à 0°C, plus préférentiellement de -40°C à 0°C, plus préférentiellement de -30°C à 0°C.

Avantageusement, la température de transition vitreuse TgE2 peut être comprise dans un domaine allant de -110°C à -23°C, de préférence allant de -100°C à -28°C, plus préférentiellement allant de -95°C à -30°C.

Avantageusement, le taux de l'élastomère diénique E1 non-fonctionnalisé peut être compris dans un domaine allant de 55 pce à 70 pce, plus préférentiellement de 55 pce à 65 pce.

Avantageusement, le taux de charge renforçante peut être compris dans un domaine allant de 20 à 100 pce, de préférence allant de 30 à 90 pce, plus préférentiellement encore allant de 40 à 90 pce.

Avantageusement, la charge renforçante peut comprendre majoritairement au moins une charge renforçante inorganique, plus préférentiellement encore peut comprendre majoritairement au moins une silice. Préférentiellement, la charge renforçante inorganique, de préférence la silice, représente plus de 50 % en masse, de préférence plus de 55 % en masse de la masse totale de la charge renforçante dans la composition de caoutchouc. Plus préférentiellement encore, la charge renforçante peut comprendre majoritairement au moins une silice et peut également comprendre au moins un noir de carbone ; le noir de carbone étant minoritaire Préférentiellement, la composition de caoutchouc peut comprendre, en outre, un agent de couplage de la charge renforçante avec l'élastomère diénique. Préférentiellement, cet agent de couplage peut être un organosilane polysulfuré.

Avantageusement, l'élastomère diénique E1 non-fonctionnalisé peut être choisi dans le groupe constitué par les polyisoprènes de synthèse, les polybutadiènes, les copolymères de butadiène et de styrène, les copolymères de butadiène et d'isoprène, les copolymères d'isoprène et de styrène et les copolymères de butadiène-styrène-isoprène. Préférentiellement, l'élastomère diénique E1 non-fonctionnalisé est choisi parmi les polybutadiènes et les copolymères de styrène et butadiène. Plus préférentiellement encore, l'élastomère diénique E1 non-fonctionnalisé est un copolymère de styrène et de butadiène.

Avantageusement, l'élastomère diénique E2 fonctionnalisé peut être choisi dans le groupe constitué le caoutchouc naturel, les polyisoprènes de synthèse, les polybutadiènes, les copolymères de butadiène et de styrène, les copolymères de butadiène et d'isoprène, les copolymères d'isobutène et d'isoprène, les copolymères d'isoprène et de styrène et les copolymères de butadiène-styrène-isoprène. Préférentiellement, l'élastomère diénique E2 fonctionnalisé est choisi parmi les polybutadiènes et les copolymères de styrène et butadiène. Plus préférentiellement encore, l'élastomère diénique E2 fonctionnalisé est un copolymère de styrène et de butadiène.

Avantageusement, l'élastomère diénique E2 fonctionnalisé peut comprendre au moins une fonction chimique apte à interagir avec la charge renforçante, la fonction chimique comprenant au moins un hétéroatome choisi dans le groupe constitué par l'azote, le soufre, l'oxygène, le phosphore, l'étain et le silicium.

Avantageusement, la charge renforçante comprend majoritairement une charge inorganique renforçante, préférentiellement une silice, et l'élastomère diénique E2 fonctionnalisé peut comprendre au moins une fonction chimique apte à interagir avec la charge inorganique renforçante, la fonction chimique comprenant au moins un hétéroatome choisi dans le groupe constitué par l'azote, le soufre, l'oxygène et le phosphore.

Avantageusement, la fonction chimique apte à interagir avec la charge renforçante peut être une fonction polaire comprenant au moins un atome d'oxygène.

Avantageusement, la fonction polaire peut être choisie dans le groupe constitué par le silanol, les alcoxysilanes porteurs ou non d'un groupement amine, l'époxyde, les éthers, les esters, les acides carboxyliques et l'hydroxyle.

Avantageusement, l'élastomère diénique E2 fonctionnalisé peut comporter une fonction polaire qui est un silanol. Préférentiellement, le silanol peut être situé en bout de chaîne ou en milieu de chaîne de la chaîne principale de l'élastomère diénique fonctionnalisé, plus préférentiellement le silanol étant situé en bout de chaîne de la chaîne principale de l'élastomère diénique fonctionnalisé.

Avantageusement, l'élastomère diénique E2 fonctionnalisé peut comporter une fonction polaire qui est un alcoxysilane porteur ou non d'un groupement amine. Préférentiellement, l'alcoxysilane porteur ou non d'un groupement amine peut être situé en bout de chaîne ou en milieu de chaîne de la chaîne principale de l'élastomère diénique E2 fonctionnalisé, plus préférentiellement le groupement alcoxysilane porteur ou non du groupement amine est situé en milieu de chaîne de la chaîne principale de l'élastomère diénique E2 fonctionnalisé. Préférentiellement, le groupement amine peut être une amine tertiaire.

Avantageusement, le taux de l'élastomère diénique E2 fonctionnalisé dans la composition de l'invention est compris dans un domaine allant 30 pce à 50 pce, de préférence de 30 pce à 45 pce, plus préférentiellement de 35 pce à 45 pce.

Avantageusement, le taux de l'élastomère diénique E1 non-fonctionnalisé dans la composition de l'invention est compris dans un domaine allant 50 pce à 70 pce et le taux de l'élastomère diénique E2 fonctionnalisé dans la composition de l'invention est compris dans un domaine allant 30 pce à 50 pce. Avantageusement, le taux de l'élastomère diénique E1 non-fonctionnalisé dans la composition de l'invention est compris dans un domaine allant 55 pce à 70 pce et le taux de l'élastomère diénique E2 fonctionnalisé dans la composition de l'invention est compris dans un domaine allant 30 pce à 45 pce.

Avantageusement, la composition de caoutchouc telle que définie ci-dessus comprend en outre au moins un plastifiant.

Avantageusement, la composition de caoutchouc telle que définie ci-dessus et ses modes de réalisation préférentiels peut être obtenue selon un procédé de fabrication qui comprend les étapes suivantes :
- introduire dans un mélangeur interne l'élastomère diénique E1 non-fonctionnalisé ayant une température de transition vitreuse TgE1 précitée et le cas échéant les autres ingrédients tels qu'un plastifiant et conduire un travail thermomécanique jusqu'à une température maximale de 200°C pour obtenir un premier mélange-maître ;
- introduire dans un mélangeur interne l'élastomère diénique E2 fonctionnalisé ayant une température de transition vitreuse TgE2 précitée, la charge renforçante et le cas échéant l'agent de couplage et les autres ingrédients tels qu'un plastifiant et conduire un travail thermomécanique jusqu'à une température maximale de 200°C pour obtenir un second mélange-maître ;
- introduire dans un mélangeur interne le premier et le second mélange maître obtenus aux étapes précédentes et conduire un travail thermomécanique jusqu'à une température maximale de 180°C pour obtenir un mélange ;
- récupérer le mélange de l'étape précédente et le refroidir à une température inférieure ou égale à 110°C ; et
- incorporer dans le mélange refroidi le système de réticulation et malaxer jusqu'à une température maximale inférieure à 110°C, préférentiellement inférieure à 80°C, et récupérer la composition de caoutchouc.

Un autre objet de la présente invention concerne une bande de roulement comprenant au moins une composition définie ci-dessus.

Un autre objet de la présente invention concerne un pneumatique comprenant au moins une composition définie ci-dessus ou bien comprenant au moins une bande de roulement telle que définie ci-dessus.

Un premier objet de la présente invention concerne une composition de caoutchouc à base d'au moins un premier élastomère diénique E1 non-fonctionnalisé ayant une température de transition vitreuse TgE1, un second élastomère diénique E2 fonctionnalisé présentant une température de transition vitreuse TgE2, une charge renforçante capable d'interagir avec l'élastomère diénique E2 fonctionnalisé et un système de réticulation, dans laquelle :
- la température de transition vitreuse TgE1 est supérieure ou égale à -50°C,
- la température de transition vitreuse TgE2 satisfait la relation mathématique TgE2 ≤ TgE1 - 23°C, et
- le taux de l'élastomère diénique E1 non-fonctionnalisé est compris dans un domaine allant de 50 pce à 70 pce.

Par « composition de caoutchouc à base de », il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression « partie en poids pour cent parties en poids d'élastomère » (ou pce), il faut entendre au sens de la présente invention, la partie, en masse pour cent parties en masse d'élastomère de la composition.

Dans la présente, sauf indication expresse différente, tous les pourcentages (%) indiqués sont des pourcentages (%) en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition de caoutchouc, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé « minoritaire » est un composé qui ne représente pas la fraction massique la plus grande parmi les composés du même type. De préférence par majoritaire, on entend présent à plus de 50 %, de préférence plus de 60 %, 70 %, 80 %, 90 %, et plus préférentiellement le composé « majoritaire » représente 100 %.

Les composés mentionnés dans la description comprenant du carbone peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Par « élastomère diénique ou indistinctement caoutchouc », qu'il soit naturel ou synthétique, doit être compris de manière connue un élastomère constitué au moins en partie (i.e., un homopolymère ou un copolymère) d'unités monomères diènes (monomères porteurs de deux doubles liaisons carbone-carbone, conjuguées ou non).

Par « matrice élastomérique », on entend l'ensemble des élastomères formant la composition de caoutchouc de l'invention.

Les élastomères diéniques peuvent être classés dans deux catégories : « essentiellement insaturés » ou « essentiellement saturés ». On entend en général par « essentiellement insaturé », un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques « essentiellement saturés », (taux de motifs d'origine diénique faible ou très faible, toujours inférieur à 15 % en moles).

On entend, plus particulièrement, par élastomère diénique susceptible d'être utilisé dans les compositions conformes à l'invention:
- tout homopolymère d'un monomère diène, conjugué ou non, ayant de 4 à 18 atomes de carbone ;
- tout copolymère d'un diène, conjugué ou non, ayant de 4 à 18 atomes de carbone et d'au moins un autre monomère.

L'autre monomère peut être une oléfine ou un diène, conjugué ou non.

A titre de diènes conjugués conviennent les diènes conjugués ayant de 4 à 12 atomes de carbone, en particulier les 1,3-diènes, tels que notamment le 1,3-butadiène et l'isoprène.

A titre de diènes non conjugués conviennent les diènes non conjugués ayant de 6 à 12 atomes de carbone, tels que le 1,4-hexadiène, l'éthylidène norbornène, le dicyclopentadiène.

A titre d'oléfines conviennent les composés vinylaromatiques ayant de 8 à 20 atomes de carbone et les α-monooléfines aliphatiques ayant de 3 à 12 atomes de carbone.

A titre de composés vinylaromatiques conviennent par exemple le styrène, l'ortho-, méta-, para-méthylstyrène, le mélange commercial « vinyle-toluène », le para-tertiobutylstyrène.

Plus particulièrement, l'élastomère diénique est :
- tout homopolymère d'un monomère diène conjugué, notamment tout homopolymère obtenu par polymérisation d'un monomère diène conjugué ayant de 4 à 12 atomes de carbone;
- tout copolymère obtenu par copolymérisation d'un ou plusieurs diènes conjugués entre eux ou avec un ou plusieurs composés vinylaromatiques ayant de 8 à 20 atomes de carbone;
- un copolymère d'isobutène et d'isoprène (caoutchouc butyle), ainsi que les versions halogénées, en particulier chlorées ou bromées, de ce type de copolymère.

La composition de caoutchouc selon l'invention comprend au moins un premier élastomère diénique E1 non-fonctionnalisé ayant une température de transition vitreuse TgE1 supérieure ou égale à -50°C et au moins un second élastomère diénique E2 fonctionnalisé ayant une température de transition vitreuse TgE2, la température de transition vitreuse TgE2 satisfaisant la relation mathématique TgE2 ≤ TgE1 - 23°C ; l'élastomère diénique E1 non-fonctionnalisé étant présent à un taux compris dans un domaine allant de 50 pce à 70 pce. De manière surprenante, cette combinaison permet d'obtenir une composition de caoutchouc qui présente d'excellentes propriétés d'hystérèse (donc une résistance au roulement réduite) tout en ayant des propriétés d'adhérence sur sol mouillé remarquables.

Les températures de transition vitreuses TgE1 et TgE2 sont mesurées selon la norme ASTM D3418:2008.

Par « un élastomère diénique fonctionnalisé », on entend au sens de la présente invention un élastomère diénique, qu'il soit naturel ou synthétique, porteur d'une fonction chimique apte à interagir avec une charge renforçante. La fonction chimique apte à interagir avec la charge renforçante peut être notamment un hétéroatome ou un groupe d'atomes comprenant au moins un hétéroatome choisi parmi l'azote, le soufre, l'oxygène, le phosphore, l'étain et le silicium.

Par « un élastomère diénique non-fonctionnalisé », on entend au sens de la présente invention un élastomère diénique, qu'il soit naturel ou synthétique, qui n'est pas porteur d'une fonction chimique apte à interagir avec une charge renforçante. Préférentiellement, l'élastomère diénique non fonctionnalisé peut consister essentiellement en des atomes de carbone et d'hydrogène. Il peut ne pas comprendre d'hétéroatomes ou alors dans des quantités qui sont des impuretés et qui résultent de son procédé de synthèse.

### Elastomère diénique E1

L'élastomère diénique E1 est non-fonctionnalisé et présente une température de transition vitreuse TgE1 supérieure ou égale à -50°C. Plus préférentiellement, la température de transition vitreuse TgE1 est comprise dans un domaine allant de -50°C à 0°C, plus préférentiellement de -40°C à 0°C, plus préférentiellement de -30°C à 0°C.

L'élastomère diénique E1 non-fonctionnalisé peut être tout élastomère diénique précité à condition que sa température de transition vitreuse TgE1 soit supérieure ou égale à -50°C.

Préférentiellement, l'élastomère diénique E1 non-fonctionnalisé est choisi dans le groupe constitué par les polyisoprènes de synthèse, les polybutadiènes, les copolymères de butadiène et de styrène, les copolymères de butadiène et d'isoprène, les copolymères d'isoprène-styrène, et les copolymères de butadiène-styrène-isoprène. Préférentiellement, l'élastomère diénique E1 non-fonctionnalisé est choisi parmi les polybutadiènes et les copolymères de styrène et butadiène. Avantageusement, l'élastomère diénique E1 non fonctionnalisé est un copolymère styrène-butadiène.

Conviennent comme élastomère diénique E1 non-fonctionnalisé en particulier, les copolymères de butadiène et de styrène ayant une Tg comprise dans un domaine allant de -50°C à 0°C, une teneur en styrène comprise dans un domaine allant de 1 % à 30 % en poids par rapport au poids du copolymère, une teneur en butadiène -1,2 vinyl comprise dans un domaine allant de 14 % à 93 % en poids par rapport au poids du copolymère, une teneur de butadiène 1,4-cis comprise dans un domaine allant de 2 % à 22 % en poids par rapport au poids du copolymère et une teneur de butadiène 1,4-trans comprise dans un domaine allant de 3 % à 33 % en poids par rapport au poids du copolymère.

Conviennent comme élastomère diénique E1 non-fonctionnalisé en particulier, les polybutadiènes ayant une Tg comprise dans un domaine allant de -50°C à 0°C, une teneur en butadiène -1,2 vinyl comprise dans un domaine allant de 52% à 95 % en poids par rapport au poids du copolymère, une teneur de butadiène 1,4-cis comprise dans un domaine allant de 0 % à 38 % en poids par rapport au poids du copolymère et une teneur de butadiène 1,4-trans comprise dans un domaine allant de 0 % à 48 % en poids par rapport au poids du copolymère.

Le taux de l'élastomère diénique E1 non-fonctionnalisé dans la composition de l'invention est compris dans un domaine allant de 50 pce à 70 pce, de préférence de 55 pce à 70 pce, plus préférentiellement de 55 pce à 65 pce.

Ces élastomères diéniques non fonctionnels sont disponibles commercialement auprès de fournisseurs tels que Nippon Zéon, JSR, Bayer etc.

### Elastomère diénique E2

Comme vu précédemment, la composition de caoutchouc comprend au moins un élastomère diénique E2, cet élastomère étant fonctionnalisé et ayant une température de transition vitreuse TgE2 satisfaisant la relation mathématique TgE2 ≤ TgE1 - 23°C.

Préférentiellement, la température de transition vitreuse TgE2 de l'élastomère diénique E2 fonctionnalisé satisfait la relation mathématique TgE2 ≤ TgE1 - 28°C, plus préférentiellement TgE2 ≤ TgE1 - 30°C.

Avantageusement, la température de transition vitreuse TgE2 de l'élastomère diénique E2 fonctionnalisé satisfait la relation mathématique TgE2 ≥ TgE1 - 65°C, plus préférentiellement TgE2 ≥ TgE1 - 50°C, plus préférentiellement encore TgE2 ≥ TgE1 - 45°C.

Plus avantageusement encore, la température de transition vitreuse TgE2 de l'élastomère diénique E2 fonctionnalisé est comprise dans un domaine allant de -110°C à -23°C, de préférence allant de -100°C à -28°C, plus préférentiellement allant de -95°C à -30°C.

L'élastomère diénique E2 fonctionnalisé peut être tout élastomère diénique précité à condition qu'il soit fonctionnalisé et que sa température de transition vitreuse satisfasse la relation mathématique précitée.

Préférentiellement, l'élastomère diénique E2 fonctionnalisé peut être choisi dans le groupe constitué le caoutchouc naturel, les polyisoprènes de synthèse, les polybutadiènes, les copolymères de butadiène et de styrène, les copolymères de butadiène et d'isoprène, les copolymères d'isobutène et d'isoprène, les copolymères d'isoprène et de styrène et les copolymères de butadiène-styrène-isoprène. Préférentiellement, l'élastomère diénique E2 fonctionnalisé est choisi parmi les polybutadiènes et les copolymères de styrène et butadiène. Plus préférentiellement encore, l'élastomère diénique E2 fonctionnalisé est un copolymère de styrène et de butadiène.

Conviennent comme élastomère diénique E2 fonctionnalisé en particulier, les copolymères de butadiène et de styrène ayant une Tg comprise dans un domaine allant de -100°C à -28°C, une teneur en styrène comprise dans un domaine allant de 1 % à 30 % en poids par rapport au poids du copolymère, une teneur en butadiène -1,2 vinyl comprise dans un domaine allant de 0 % à 74 % en poids par rapport au poids du copolymère, une teneur de butadiène 1,4-cis comprise dans un domaine allant de 10 % à 40 % en poids par rapport au poids du copolymère et une teneur de butadiène 1,4-trans comprise dans un domaine allant de 15 % à 59 % en poids par rapport au poids du copolymère.

Conviennent comme élastomère diénique E2 fonctionnalisé en particulier, les polybutadiènes ayant une Tg comprise dans un domaine allant de -110°C à -23°C, une teneur en butadiène -1,2 vinyl comprise dans un domaine allant de 0% à 82 % en poids par rapport au poids du copolymère, une teneur de butadiène 1,4-cis comprise dans un domaine allant de 0 % à 100 % en poids par rapport au poids du copolymère et une teneur de butadiène 1,4-trans comprise dans un domaine allant de 0 % à 100 % en poids par rapport au poids du copolymère.

La fonctionnalisation de l'élastomère diénique E2 est connue. Elle peut se faire lors de la synthèse de l'élastomère diénique ou bien après sa synthèse par greffage de fonctions chimiques sur les monomères de l'élastomère diénique.

L'élastomère diénique E2 fonctionnalisé comprend au moins une fonction chimique apte à interagir avec la charge renforçante, la fonction chimique comprenant au moins un hétéroatome choisi dans le groupe constitué par l'azote, le soufre, l'oxygène, le phosphore, l'étain et le silicium. On peut, à titre d'exemple, citer parmi ces fonctions les amines primaires, secondaires ou tertiaires, cycliques ou non, les isocyanates, les imines, les cyano, les thiols, les carboxylates, les époxydes, les phosphines primaires, secondaires ou tertiaires. Cette interaction de l'élastomère diénique E2 fonctionnalisé avec la charge renforçante peut s'établir par exemple par le biais de liaisons covalentes, de liaisons hydrogène, de liaisons ioniques et/ou électrostatiques entre la ou les fonctions de l'élastomère diénique et les fonctions chimiques présentent à la surface de la charge renforçante.

Préférentiellement, lorsque la charge renforçante comprend majoritairement une charge inorganique renforçante, préférentiellement une silice, l'élastomère diénique E2 fonctionnalisé peut comprendre au moins une fonction chimique apte à interagir avec la charge renforçante, la fonction chimique comprenant au moins un hétéroatome choisi dans le groupe constitué par l'azote, le soufre, l'oxygène et le phosphore.

Préférentiellement, la fonction chimique apte à interagir avec la charge renforçante de l'élastomère diénique E2 est une fonction polaire comprenant au moins un atome d'oxygène.

Préférentiellement, la fonction polaire peut être choisie dans le groupe constitué par le silanol, les alkoxysilanes, alkoxysilanes porteurs d'un groupement amine, l'époxyde, les éthers, les esters, les acides carboxyliques et l'hydroxyle. De tels élastomères fonctionnalisés sont connus en soi et sont décrits notamment dans les documents suivants FR2740778, US6013718, WO2008/141702, FR2765882, WO01/92402, WO2004/09686, EP1127909, US6503973, WO2009/000750 et WO 2009/000752.

De préférence, l'élastomère diénique fonctionnalisé est un élastomère diénique comportant une fonction polaire qui est un silanol.

Préférentiellement, le silanol est situé en bout de chaîne ou en milieu de la chaîne principale de l'élastomère diénique fonctionnalisé.

Préférentiellement, l'élastomère diénique fonctionnalisé peut être un élastomère diénique (notamment un SBR) dans lequel la fonction silanol est située en bout de chaîne. Cet élastomère diénique fonctionnalisé comprend en une extrémité de sa chaîne principale une fonction silanol ou un groupement polysiloxane ayant une extrémité silanol de formule -(SiR₁R₂-O-)mH avec m représentant un nombre entier de valeur allant de 3 à 8, de préférence 3, R₁ et R₂, identiques ou différents, représentent un radical alkyle de 1 à 10 atomes de carbone, de préférence un radicale alkyle ayant 1 à 4 atomes de carbone.

Ce type d'élastomère peut être obtenu selon les procédés décrits dans le document EP0778311 et plus particulièrement selon le procédé consistant, après une étape de polymérisation anionique, de fonctionnaliser l'élastomère vivant avec un agent de fonctionnalisation de type polysiloxane cyclique. À titre de polysiloxanes cycliques, on peut citer ceux répondant à la formule (V) 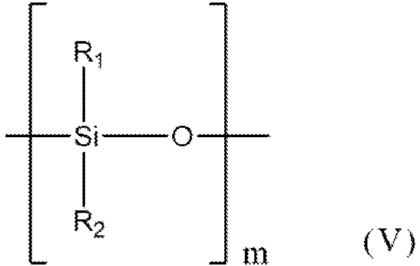 avec m représente un nombre entier de valeur allant de 3 à 8, de préférence 3, R₁ et R₂, identiques ou différents, représentent un radical alkyle de 1 à 10 atomes de carbone, de préférence un radicale alkyle ayant 1 à 4 atomes de carbone. Parmi ces composés on peut citer l'hexaméthylcyclotrisiloxane.

L'élastomère diénique E2 fonctionnalisé peut être un élastomère diénique (notamment un SBR) comportant une fonction polaire qui est un alcoxysilane porteur ou non d'une autre fonction, notamment d'une fonction amine. Préférentiellement l'alcoxysilane porteur ou non d'une autre fonction (de préférence porteur d'un groupement amine) est situé en bout de chaîne ou en milieu de chaîne de la chaîne principale de l'élastomère diénique fonctionnalisé, plus préférentiellement le groupement alcoxysilane porteur ou non du groupement amine est situé en milieu de chaîne de la chaîne principale de l'élastomère diénique fonctionnalisé.

Ainsi, l'élastomère diénique E2 fonctionnalisé peut comprendre au sein de sa structure au moins un groupe alcoxysilane et au moins une autre fonction, l'atome de silicium du groupe alcoxysilane étant lié à la ou aux chaînes élastomères, le groupe alcoxysilane étant éventuellement partiellement ou totalement hydrolysé en silanol.

Selon certaines variantes, le groupe alcoxysilane se situe majoritairement en une extrémité de la chaîne principale de l'élastomère.

Selon d'autres variantes, le groupe alcoxysilane se situe majoritairement dans la chaîne élastomère principale, on dira alors que l'élastomère diénique est couplé ou encore fonctionnalisé en milieu de chaîne, par opposition à la position en « extrémité de chaîne » et bien que le groupement ne se situe pas précisément au milieu de la chaîne élastomère. L'atome de silicium de cette fonction relie les deux branches de la chaîne principale de l'élastomère diénique.

Le groupe alcoxysilane comprend un radical alcoxyle en C1-C10, éventuellement partiellement ou totalement hydrolysé en hydroxyle, voire en C1-C8, de préférence en C1-C4, et est plus préférentiellement méthoxy et éthoxy.

L'autre fonction est de préférence portée par le silicium du groupe alcoxysilane, directement ou par l'intermédiaire d'un groupe espaceur défini comme étant un atome ou un groupe d'atomes. Préférentiellement le groupe espaceur est un radical hydrocarboné divalent, linéaire ou ramifié, aliphatique en C1-C18, saturé ou non, cyclique ou non, ou un radical hydrocarboné divalent aromatique en C6-C18.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en C1-C10, de préférence alkyle en C1-C4, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements méthylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-. A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole. Ainsi, à titre de fonction carboxylate, on peut citer les acrylates ou les méthacrylates. Une telle fonction est de préférence un méthacrylate. A titre de fonction époxyde, on peut citer les groupements époxy ou glycidyloxy. A titre de fonction phosphine secondaire ou tertiaire, on peut citer les phosphines substituées par des radicaux alkyle en C1-C10, de préférence alkyle en C1-C4, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

L'autre fonction est de préférence une amine tertiaire, plus préférentiellement un groupement diéthylamino- ou diméthylamino-.

Le groupe alcoxysilane peut être représenté par la formule

(*-)ₐSi(OR')_{b}R_{c}X

dans laquelle,
- *- représente la liaison à une chaîne élastomère ;
- le radical R représente un radical alkyle, substitué ou non substitué, en C1-C10, voire en C1-C8, de préférence un radical alkyle en C1-C4, plus préférentiellement méthyle et éthyle ;
- dans le ou les radicaux alcoxyle de formule -OR', éventuellement partiellement ou totalement hydrolysés en hydroxyle, R' représente un radical alkyle, substitué ou non substitué, étant en C1-C10, voire en C1-C8, de préférence un radical alkyle en C1-C4, plus préférentiellement méthyle et éthyle ;
- X représente un groupement incluant l'autre fonction;
- a vaut 1 ou 2, b vaut 1 ou 2, et c vaut 0 ou 1, sous réserve que a + b + c =3.

Ce type d'élastomère est principalement obtenu par fonctionnalisation d'un élastomère vivant issu d'une polymérisation anionique par un composé comprenant un groupement alcoxysilane, notamment choisi parmi les composés trialcoxysilanes et dialcoxyalkylsilanes substitués par un groupement comprenant une autre fonction liée directement ou par l'intermédiaire d'un groupe espaceur à l'atome de silicium, la fonction et le groupe espaceur étant tels que définis plus haut. Il convient de préciser qu'il est connu de l'homme du métier que lorsqu'un élastomère est modifié par réaction d'un agent de fonctionnalisation sur l'élastomère vivant issu d'une étape de polymérisation anionique, on obtient un mélange d'espèces modifiées de cet élastomère dont la composition dépend des conditions de la réaction de modification et notamment de la proportion de sites réactifs de l'agent de fonctionnalisation par rapport au nombre de chaînes élastomères vivantes. Ce mélange comprend des espèces fonctionnalisées en extrémité de chaîne, couplées, étoilées et/ou non fonctionnalisées.

Préférentiellement, le taux de l'élastomère diénique E2 fonctionnalisé dans la composition de l'invention est compris dans un domaine allant 30 pce à 50 pce, de préférence de 30 pce à 45 pce, plus préférentiellement de 35 pce à 45 pce.

Ces élastomères diéniques non fonctionnels sont disponibles commercialement auprès de fournisseurs tels que Nippon Zéon, JSR, Bayer etc ou peuvent être synthétisés selon des procédés connus.

### Charge renforçante

La composition de caoutchouc de l'invention peut comprendre une ou plusieurs charges renforçantes capable d'interagir avec l'élastomère diénique E2.

On peut utiliser tout type de charge dite renforçante, connue pour ses capacités à renforcer une composition de caoutchouc utilisable notamment pour la fabrication de bandages pneumatiques, par exemple une charge organique telle que du noir de carbone, une charge inorganique telle que de la silice ou encore un mélange de ces deux types de charges.

Par « charge renforçante capable d'interagir avec l'élastomère diénique fonctionnalisé », on entend toute charge renforçante, notamment inorganique telle que la silice par exemple, capable de former, au sein d'une composition de caoutchouc, au moyen d'un élastomère diénique fonctionnalisé, une liaison physique ou chimique. Cette interaction peut s'établir par exemple par le biais de liaisons covalentes, de liaisons hydrogène, de liaisons ioniques et/ou électrostatiques entre ledit élastomère fonctionnalisé et les fonctions présente à la surface des charges renforçantes.

Comme noirs de carbone conviennent tous les noirs de carbone, notamment les noirs conventionnellement utilisés dans les bandages pneumatiques ou les bandages non-pneumatique ou leurs bandes de roulement. Parmi ces derniers, on citera plus particulièrement les noirs de carbone renforçants de la série 200 comme par exemple le N234. Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, (voir par exemple demandes WO97/36724-A2 ou WO99/16600-A1).

Comme exemple de charges organiques autres que des noirs de carbone, on peut citer les charges organiques de polyvinyle fonctionnalisé telles que décrites dans les demandes WO2006/069792-A1, WO2006/069793-A1, WO2008/003434-A1 et WO2008/003435-A1.

Préférentiellement, la charge renforçante capable d'interagir avec l'élastomère diénique E2 comprend majoritairement au moins une charge inorganique renforçante, plus préférentiellement encore comprend majoritairement au moins une silice.

Par « charge inorganique renforçante », doit être entendu ici toute charge inorganique ou minérale, quelles que soient sa couleur et son origine (naturelle ou de synthèse), encore appelée charge « blanche », charge « claire » ou même charge « non-noire » par opposition au noir de carbone, capable de renforcer à elle seule, sans autre moyen qu'un agent de couplage intermédiaire, une composition de caoutchouc destinée à la fabrication de bandages pneumatiques ou non pneumatiques. De manière connue, certaines charges inorganiques renforçantes peuvent se caractériser notamment par la présence de groupes hydroxyle (-OH) à leur surface.

Comme charges inorganiques renforçantes conviennent notamment des charges minérales du type siliceux, préférentiellement la silice (SiO₂) ou du type alumineux, en particulier l'alumine (Al₂O₃).

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 m²/g, de préférence comprises dans un domaine allant de 30 à 400 m²/g, notamment de 60 à 300 m²/g. On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ^{®} 5000GR », « Ultrasil ^{®} 7000GR » de la société Evonik, les silices « Zeosil ^{®} 1085GR», « Zeosil^{®} 1115 MP », « Zeosil^{®} 1165MP », « Zeosil^{®} Premium 200MP », « Zeosil^{®} HRS 1200 MP » de la Société Solvay. À titre de silice non HDS, les silices commerciales suivantes peuvent être utilisées : les silices « Ultrasil ^{®} VN2GR », « Ultrasil ^{®} VN3GR » de la société Evonik, la silice « Zeosil^{®} 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

L'état physique sous lequel se présente la charge inorganique renforçante est indifférent, que ce soit sous forme de poudre, de microperles, de granulés, ou encore de billes ou toute autre forme densifiée appropriée. Bien entendu on entend également par charge inorganique renforçante des mélanges de différentes charges inorganiques renforçantes, en particulier de silices telles que décrites ci-dessus.

Selon une mode de réalisation préférée de l'invention, la charge renforçante est majoritairement une charge renforçante inorganique (de préférence de la silice), c'est-à-dire qu'elle comprend plus de 50 % (>50%) en poids d'une charge renforçante inorganique telle que de la silice par rapport au poids total de la charge renforçante. Optionnellement selon ce mode de réalisation, la charge renforçante peut comprendre également du noir de carbone. Selon cette option, le noir de carbone est utilisé à un taux inférieur ou égal à 20 pce dans la composition de caoutchouc, plus préférentiellement inférieur ou égal à 10 pce (par exemple le taux de noir de carbone peut être compris dans un domaine allant de 0,5 à 20 pce, notamment allant de 1 à 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

L'homme du métier comprendra qu'en remplacement de la charge inorganique renforçante décrite ci-dessus, pourrait être utilisée une charge renforçante d'une autre nature, dès lors que cette charge renforçante d'une autre nature serait recouverte d'une couche inorganique telle que de la silice, ou bien comporterait à sa surface des sites fonctionnels, notamment hydroxyles, nécessitant l'utilisation d'un agent de couplage pour établir la liaison entre cette charge renforçante et l'élastomère diénique.

L'homme du métier saura adapter le taux de charge renforçante total selon l'utilisation concernée, notamment selon le type de bandages pneumatiques concerné, par exemple bandage pneumatique pour moto, pour véhicule de tourisme ou encore pour véhicule utilitaire tel que camionnette ou poids lourd.

De préférence, le taux de charge renforçante dans la composition de caoutchouc, est compris dans un domaine allant de 20 à 100 pce, plus préférentiellement de 30 à 90 pce, et encore plus préférentiellement de 40 à 90 pce ; l'optimum étant de manière connue différent selon les applications particulières visées.

Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0,05 à 0,17]. Pour les charges inorganiques telles que la silice par exemple, les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante. Pour les noirs de carbone, la surface spécifique STSA est déterminée selon la norme ASTM D6556-2016.

Les agents de couplage de la charge renforçante inorganique :
Comme vu ci-dessus, la charge renforçante à elle seule est capable d'interagir avec l'élastomère diénique E2 fonctionnalisé.

Toutefois, lorsque la charge renforçante est une charge inorganique, telle que la silice par exemple, il peut être avantageux d'augmenter le pouvoir renforçant de cette charge en utilisant un agent de couplage qui permet de coupler la charge inorganique renforçante à l'élastomère diénique.

On peut utiliser de manière bien connue tout agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels. Par « bifonctionnel », on entend un composé possédant un premier groupe fonctionnel capable d'interagir avec la charge inorganique et un second groupe fonctionnel capable d'interagir avec l'élastomère diénique. Par exemple, un tel composé bifonctionnel peut comprendre un premier groupe fonctionnel comprenant un atome de silicium, le dit premier groupe fonctionnel étant apte à interagir avec les groupes hydroxyles d'une charge inorganique et un second groupe fonctionnel comprenant un atome de soufre, ledit second groupe fonctionnel étant apte à interagir avec l'élastomère diénique.

Préférentiellement, les organosilanes sont choisis dans le groupe constitué par les organosilanes polysulfurés (symétriques ou asymétriques) tels que le tétrasulfure de bis(3-triéthoxysilylpropyl), en abrégé TESPT commercialisé sous la dénomination « Si69 » par la société Evonik ou le disulfure de bis-(triéthoxysilylpropyle), en abrégé TESPD commercialisé sous la dénomination « Si75 » par la société Evonik, les polyorganosiloxanes, les mercaptosilanes, les mercaptosilanes bloqués, tels que l'octanethioate de S-(3-(triéthoxysilyl)propyle)commercialisé par la société Momentive sous la dénomination « NXT Silane ». Plus préférentiellement, l'organosilane est un organosilane polysulfuré.

Bien entendu pourraient être également utilisés des mélanges des agents de couplage précédemment décrits.

La teneur en agent de couplage dans la composition de caoutchouc de l'invention est avantageusement inférieure ou égale à 20 pce, étant entendu qu'il est en général souhaitable d'en utiliser le moins possible. Typiquement le taux d'agent de couplage représente de 0,5 % à 15 % en poids par rapport à la quantité de charge inorganique renforçante. Son taux est préférentiellement compris dans un domaine allant de 0,5 à 20 pce. Ce taux est aisément ajusté par l'homme du métier selon le taux de charge inorganique renforçante utilisé dans la composition de l'invention.

### Les agents de recouvrement

Les compositions de caoutchouc peuvent également contenir des agents de recouvrement de la charge inorganique renforçante lorsqu'une charge inorganique renforçante est utilisée, permettant d'améliorer leur faculté de mise en œuvre à l'état cru. Ces agents de recouvrement sont bien connus (voir par exemple les demandes de brevet WO2006/125533-A1, WO2007/017060-A1 et WO2007/003408-A1), on citera par exemple des silanes hydrolysables tels que des hydroxysilanes (voir par exemple WO2009/062733-A2) des alkylalkoxysilanes, des polyols (par exemple diols ou triols), des polyéthers (par exemple des polyéthylène-glycols), des amines primaires, secondaires ou tertiaires, des polyorgano-siloxanes hydroxylés ou hydrolysables (par exemple des α,ω-dihydroxy-poly-organosilanes (voir par exemple EP0784072-A1).

### Système de réticulation

Les compositions de caoutchouc de l'invention comprennent au moins un système de réticulation. Le système de réticulation peut être tout type de système connu de l'homme de l'art dans le domaine des compositions de caoutchouc pour bandages pneumatiques ou non pneumatiques. Il peut notamment être à base de soufre, et/ou de peroxyde et/ou de bismaléimides.

De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels que l'oxyde de zinc, l'acide stéarique ou tout composé équivalent tels que les sels d'acide stéarique et sels de métaux de transition, les dérivés guanidiques (en particulier diphénylguanidine), ou encore des retardateurs de vulcanisation connus.

Le soufre est utilisé à un taux préférentiel compris dans un domaine allant de 0,5 à 12 pce, plus préférentiellement dans un domaine allant de 0,7 à 10 pce. L'accélérateur de vulcanisation est utilisé à un taux préférentiel compris dans un domaine allant de 0,5 à 10 pce, plus préférentiellement compris dans un domaine allant de 0,5 à 5,0 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates.

### Plastifiants

La composition de caoutchouc selon l'invention peut comprendre au moins un plastifiant.

De manière connue de l'homme de l'art des compositions de caoutchouc pour bandages pneumatiques ou non pneumatiques, ce plastifiant est de préférence choisi parmi les résines hydrocarbonées de haute température de transition vitreuse (Tg), les résines hydrocarbonées de faible Tg, les huiles plastifiantes, et leurs mélanges. De préférence, le plastifiant est choisi parmi les résines hydrocarbonées de haute Tg, les huiles plastifiantes, et leurs mélanges.

De manière connues, les plastifiants dans les compositions de caoutchouc permettent de modifier la viscosité d'une composition de caoutchouc, d'ajuster la température de transition vitreuse de la composition de caoutchouc par rapport à son optimum d'utilisation.

Une résine hydrocarbonée de haute Tg est par définition un solide à température et pression ambiante (20°C, 1 atm), tandis qu'une huile plastifiante est liquide à température ambiante et pression et qu'une résine hydrocarbonée de faible Tg est visqueuse à température ambiante et pression.

Les résines hydrocarbonées, appelées aussi résines plastifiantes hydrocarbonées, sont des polymères bien connus de l'homme du métier, essentiellement à base de carbone et hydrogène mais pouvant comporter d'autres types d'atomes, par exemple l'oxygène, utilisables en particulier comme agents plastifiants. Elles sont par nature au moins partiellement miscibles (i.e., compatibles) aux taux utilisés avec les compositions de caoutchouc auxquelles elles sont destinées, de manière à agir comme de véritables agents diluants. Elles ont été décrites par exemple dans l'ouvrage intitulé « Hydrocarbon Resins » de R. Mildenberg, M. Zander et G. Collin (New York, VCH, 1997, ISBN 3-527-28617-9) dont le chapitre 5 est consacré à leurs applications, notamment en caoutchouterie pour bandages pneumatiques (5.5. « Rubber Tires and Mechanical Goods »). De manière connue, ces résines hydrocarbonées peuvent être qualifiées aussi de résines thermoplastiques en ce sens qu'elles se ramollissent par chauffage et peuvent ainsi être moulées. Le point de ramollissement des résines hydrocarbonées est mesuré selon la norme ISO 4625 (méthode « Ring and Ball »). La Tg est mesurée selon la norme ASTM D3418 (2008). La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 µm avant injection ; étalonnage de Moore avec des étalons de polystyrène ; jeu de 3 colonnes « WATERS » en série (« STYRAGEL » HR4E, HR1 et HR0.5) ; détection par réfractomètre différentiel (« WATERS 2410 ») et son logiciel d'exploitation associé (« WATERS EMPOWER »). Les résines hydrocarbonées peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). De manière connue, les résines hydrocarbonées de haute Tg sont des résines hydrocarbonées, thermoplastiques, dont la Tg est supérieure à 20°C.

De préférence, le plastifiant peut optionnellement comprendre une résine hydrocarbonée, solide à température et pression ambiante, dite résine de haute Tg. De préférence, la résine plastifiante hydrocarbonée de haute Tg présente au moins une quelconque des caractéristiques suivantes :
- une Tg supérieure à 30°C ;
- une masse moléculaire moyenne en nombre (Mn) comprise entre 300 et 2000 g/mol, plus préférentiellement entre 400 et 1500 g/mol ;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine plastifiante hydrocarbonée de haute Tg présente l'ensemble des caractéristiques préférentielles ci-dessus.

Le plastifiant peut optionnellement comprendre une résine hydrocarbonée visqueuse à 20 °C, dite « de faible Tg », c'est-à-dire qui par définition présente une Tg comprise dans un domaine allant de -40 °C à 20°C.

De préférence, la résine plastifiante hydrocarbonée de faible Tg présente au moins une quelconque des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C;
- un indice de polymolécularité (Ip) inférieur à 3, plus préférentiellement inférieur à 2 (rappel : Ip = Mw/Mn avec Mw masse moléculaire moyenne en poids).

Plus préférentiellement, cette résine hydrocarbonée de faible Tg présente l'ensemble des caractéristiques préférentielles ci-dessus.

Le plastifiant peut contenir également une huile d'extension (ou huile plastifiante) liquide à 20 °C, dit à « basse Tg », c'est-à-dire qui par définition présente une Tg inférieure à -20 °C, de préférence inférieure à -40 °C. Toute huile d'extension, qu'elle soit de nature aromatique ou non-aromatique connue pour ses propriétés plastifiantes vis-à-vis d'élastomères, est utilisable. A température ambiante (20°C), ces huiles, plus ou moins visqueuses, sont des liquides (c'est-à-dire, pour rappel, des substances ayant la capacité de prendre à terme la forme de leur contenant), par différence notamment avec les résines hydrocarbonées de haute Tg qui sont par nature solides à température ambiante. Conviennent particulièrement les huiles plastifiantes choisies dans le groupe constitué par les huiles naphténiques (à basse ou haute viscosité, notamment hydrogénées ou non), les huiles paraffiniques, les huiles MES (Medium Extracted Solvates), les huiles TDAE (Treated Distillate Aromatic Extracts), les huiles RAE (Residual Aromatic Extract oils), les huiles TRAE (Treated Residual Aromatic Extract) et les huiles SRAE (Safety Residual Aromatic Extract oils), les huiles minérales, les huiles végétales, les plastifiants éthers, les plastifiants esters, les plastifiants phosphates, les plastifiants sulfonates et les mélanges de ces composés.

Les résines hydrocarbonées de haute Tg, les résines hydrocarbonées de basse Tg, et les huiles plastifiantes préférentielles ci-dessus sont bien connues de l'homme du métier et disponibles commercialement.

### Autres additifs

Les compositions de caoutchouc conformes à l'invention peuvent comporter également tout ou partie des additifs et agents de mise en œuvre usuels, connus de l'homme de l'art et habituellement utilisés dans les compositions de caoutchouc pour bandages pneumatiques ou non pneumatiques, en particulier pour bandes de roulement, comme par exemple, des charges (renforçantes ou non renforçantes / autres que celles précitées), des pigments, des agents de protection tels que cires anti-ozone, anti-ozonants chimiques, anti-oxydants, des agents anti-fatigue, des résines renforçantes (telles que décrites par exemple dans la demande WO 02/10269).

### Obtention des compositions de caoutchouc selon l'invention

La composition de caoutchouc peut être obtenue par les procédés habituels de fabrications de compositions de caoutchouc tel que le mélangeage à sec des différents ingrédients.

Selon un mode de réalisation, la composition de caoutchouc conforme à l'invention est fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type « Banbury »), dans l'ordre séquentiel suivant, l'élastomère diénique E2 fonctionnalisé présentant une température de transition vitreuse TgE2, la charge renforçante et éventuellement l'agent de couplage de la charge renforçante. Après un malaxage thermomécanique au cours duquel ces ingrédients sont maintenus à une température comprise dans un domaine allant de 140°C à 200°C pendant une à deux minutes, on introduit dans le mélangeur interne l'élastomère diénique E1 non-fonctionnalisé ayant une température de transition vitreuse TgE1 ainsi que tous les constituants nécessaires, à l'exception du système de réticulation. Ces ingrédients subissent un malaxage thermomécanique pendant 2 à 10 minutes jusqu'à une température maximale comprise dans un domaine allant de 110°C à 200°C, de préférence allant de 130°C à 185°C (et dite « température de tombée ») ;
- une seconde phase de travail mécanique (phase dite « productive »), est réalisée dans un mélangeur externe tel qu'un mélangeur à cylindres, après refroidissement du mélange obtenu au cours de la première phase non-productive jusqu'à une plus basse température, typiquement inférieure à 120°C, par exemple dans un domaine allant de 40°C à 100°C. On incorpore alors le système de réticulation en mélangeant pendant 5 à 15 min, pour obtenir le mélange de caoutchouc de l'invention.

Selon un autre mode préféré de réalisation de l'invention, la composition de caoutchouc de l'invention est préparée sous forme de deux mélanges-maîtres, puis les mélanges-maîtres sont mélangés de manière à obtenir la composition de caoutchouc selon l'invention.

Plus précisément, selon ce mode de réalisation, on prépare un premier mélange-maître en mélangeant dans un mélangeur approprié tel qu'un mélangeur interne usuel (par exemple de type « Banbury ») ledit élastomère diénique E1 non-fonctionnalisé et les autres constituants éventuels tels que le ou les plastifiants, les anti-ozonant, etc à l'exception du système de vulcanisation. Un travail thermomécanique est conduit pendant 2 à 10 minutes jusqu'à une température maximale comprise dans un domaine allant de 110°C à 200°C, de préférence allant de 130°C à 185°C (dite « température de tombée »). On récupère ainsi le premier mélange maître comprenant au moins l'élastomère diénique E1 non-fonctionnalisé.

On prépare ensuite un second mélange-maître en mélangeant dans un mélangeur approprié tel qu'un mélangeur interne usuel (par exemple de type « Banbury ») ledit élastomère diénique E2 fonctionnalisé, la charge renforçante et les autres constituants éventuels tels que l'agent de couplage de la charge renforçante et/ou le ou les plastifiants, les anti-ozonant, etc à l'exception du système de vulcanisation. Un travail thermomécanique est conduit pendant une durée 2 à 10 minutes jusqu'à une température maximale comprise dans un domaine allant de 140°C à 200°C, de préférence allant de 140°C à 185°C (et dite « température de tombée »). On récupère ainsi le second mélange maître comprenant au moins l'élastomère diénique E2 fonctionnalisé et la charge renforçante capable d'interagir avec l'élastomère diénique E2 fonctionnalisé.

On introduit dans un mélangeur interne usuel (par exemple de type « Banbury »), les deux mélanges maîtres des étapes précédentes et on conduit un travail thermomécanique pendant 2 à 10 minutes jusqu'à une température maximale comprise dans un domaine allant de 110°C à 180°C, de préférence allant de 130°C à 180°C (et dite « température de tombée »).

Le mélange de l'étape précédente est ensuite refroidi sur un mélangeur externe tel qu'un mélangeur à cylindres jusqu'à une température inférieure ou égale à 110°C.On incorpore alors le système de réticulation par mélangeage pendant 5 à 15 min, et on récupère la composition de caoutchouc.

Quel que soit le mode de préparation de la composition de caoutchouc, la composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement d'un bandage pneumatique ou non pneumatique notamment pour véhicule tourisme.

La composition peut être soit à l'état cru (avant réticulation ou vulcanisation), soit à l'état cuit (après réticulation ou vulcanisation), peut être un produit semi-fini qui peut être utilisé dans un bandage pneumatique ou non pneumatique.

La réticulation de la composition de caoutchouc peut être conduite de manière connue de l'homme du métier, par exemple à une température comprise dans un domaine allant de 130°C à 200°C, sous pression.

### Autres objets de l'invention

Un autre objet de la présente invention concerne une bande de roulement comprenant au moins une composition définie ci-dessus. La composition de caoutchouc selon l'invention peut constituer toute la bande de roulement ou bien une partie de la bande de roulement.

Un autre objet de la présente invention concerne un bandage pneumatique ou non pneumatique comprenant au moins une composition définie ci-dessus ou une bande de roulement définie ci-dessus.

Par « bandage pneumatique », on entend un bandage destiné à former une cavité en coopérant avec un élément support, par exemple une jante, cette cavité étant apte à être pressurisée à une pression supérieure à la pression atmosphérique. Par opposition, un « bandage non pneumatique » n'est pas apte à être pressurisé. Ainsi, un bandage non pneumatique est un corps torique constitué par au moins un matériau polymérique, destiné à assurer la fonction d'un pneumatique mais sans être soumis à une pression de gonflage. Un bandage non pneumatique peut être plein ou creux. Un bandage non pneumatique creux peut contenir de l'air, mais à la pression atmosphérique, c'est-à-dire qu'il n'a pas de rigidité pneumatique apportée par un gaz de gonflage à une pression supérieure à la pression atmosphérique.

Les bandages pneumatiques selon l'invention sont destinés à équiper notamment des véhicules de tout type tels que les véhicules de tourisme, les véhicules à deux roues, les véhicules poids lourds, les véhicules agricoles, les véhicules de génie civil ou des avions ou, plus généralement, sur tout dispositif roulant. Les bandages non pneumatiques sont destinés à équiper notamment des véhicules de tourisme ou des deux roues. De manière préférée, les bandages pneumatiques selon l'invention sont destinés à équiper les véhicules tourisme.

Préférentiellement, le bandage pneumatique ou non pneumatique comprend au moins une bande de roulement comprenant au moins une composition de caoutchouc définie ci-dessus.

### METHODES DE MESURES

### Détermination de la température de transition vitreuse des élastomères

Les températures de transitions vitreuses (Tg) des élastomères, avant leur utilisation, sont déterminées à l'aide d'un calorimètre différentiel (« différential scanning calorimeter ») selon la norme ASTM D3418:2008.

### Détermination du coefficient de frottement dynamique µₘₐₓ

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8). Les éprouvettes sont réalisées par moulage, puis réticulation d'un support caoutchouteux carré (50mmx50mm) de 6 mm d'épaisseur. Après fermeture du moule, celui-ci est placé dans une presse à plateaux chauffants à la température de 150°C, et pendant le temps nécessaire à la réticulation du matériau (typiquement plusieurs dizaines de minutes), à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5 % d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 1,2 m/s. La contrainte normale appliquée σₙ est de 400 kPa (soit 4 bars). Ces conditions sont décrites ci-après par « conditions de sol mouillé ». On mesure en continu la contrainte tangentielle σₜ opposée au mouvement de l'éprouvette sur le sol. Le rapport entre la contrainte tangentielle σₜ et la contrainte normale σₙ donne le coefficient de frottement dynamique µ. Les valeurs de coefficient de frottement dynamique sont mesurées lors d'un balayage en température de la solution aqueuse, allant de 3°C à 44°C, sont obtenues en régime permanent après stabilisation de la valeur de la contrainte tangentielle σₜ.

Dans les exemples, on indique la valeur maximale du coefficient de frottement dynamique (noté µₘₐₓ) mesurée lors de ce balayage.

Sauf indication contraire, les résultats sont indiqués en base 100. La valeur arbitraire 100 étant attribuée à la composition comparative pour calculer et comparer ensuite le coefficient de frottement dynamique maximal des différents échantillons testés. La valeur en base 100 pour l'échantillon à tester est calculée selon l'opération : (valeur de µₘₐₓ de l'échantillon à tester / valeur du µₘₐₓ composition comparative) × 100. De cette façon, un résultat inférieur à 100 indiquera une diminution du coefficient de frottement dynamique maximal et donc une baisse de la performance d'adhérence sur sol mouillé. Inversement, un résultat supérieur à 100 indiquera une augmentation du coefficient de frottement dynamique maximal et donc une augmentation de la performance d'adhérence sur sol mouillé.

### Mesure des propriétés dynamiques après cuisson.

Les propriétés dynamiques tan(δ)ₘₐₓ sont mesurées sur un viscoanalyseur (Metravib V A4000), selon la norme ASTM D 5992 - 96. On enregistre la réponse d'un échantillon de composition vulcanisée (2 éprouvettes cylindriques de 2 mm d'épaisseur et de 78,5 mm² de section), soumis à une sollicitation sinusoïdale en cisaillement simple alterné, à la fréquence de 10 Hz et à une température de 40°C. On effectue un balayage en amplitude de déformation crête à crête de 1 % à 100 % (cycle aller), puis de 100 % à 1 % (cycle retour). Les résultats exploités sont le facteur de perte (tan δ). Pour le cycle retour, on indique la valeur maximale de tan δ observée(tan(δ)ₘₐₓ) noté tan δ_{max à 40°C}.

Les résultats sont exprimés en performance base 100, c'est-à-dire qu'on affecte arbitrairement la valeur 100 à la composition comparative, pour calculer et comparer ensuite le tan δ _{max à 40°C} des différentes compositions de caoutchouc testées. La valeur en base 100 est calculée selon l'opération : (valeur de tan δₘₐₓ à _{40°C} de la composition comparative / valeur de tan δₘₐₓ à _{40°C} de l'échantillon) * 100. De cette façon, une valeur plus basse représente une diminution des propriétés d'hystérèse tandis qu'une valeur plus élevée représente une amélioration des propriétés d'hystérèse.

### EXEMPLES

### 1- Ingrédients :

Les ingrédients utilisés dans les exemples sont les suivants :
Elastomère (1A) : Copolymère styrène-butadiène, non fonctionnalisé, ayant une Tg de -28°C mesurée selon la norme ASTM D3418:2008, un taux de styrène de 41 % en poids par rapport au poids total du copolymère, un taux de butadiène 1,2 vinyl de 14 % en poids par rapport au poids total du copolymère, un taux de butadiène 1,4-trans de 27 % en poids par rapport au poids total du copolymère.
Elastomère (1B) : Copolymère styrène-butadiène porteur d'une fonction silanol en extrémité de la chaîne élastomère, et ayant une Tg de -24°C mesurée selon la norme ASTM D3418:2008, un taux de styrène de 25 % en poids par rapport au poids total du copolymère, un taux de butadiène 1,2 vinyl de 43 % en poids par rapport au poids total du copolymère, un taux de butadiène 1,4-trans de 16 % en poids par rapport au poids total du copolymère.
Elastomère (1C) : Copolymère styrène-butadiène ayant une Tg de -65°C mesurée selon la norme ASTM D3418:2008, un taux de styrène de 16 % en poids par rapport au poids total du copolymère, un taux de butadiène 1,2 vinyl de 20 % en poids par rapport au poids total du copolymère, un taux de butadiène 1,4-trans de 39 % en poids par rapport au poids total du copolymère.
Elastomère (1D) : Copolymère styrène-butadiène porteur d'une fonction amino-alcoxysilane en milieu de chaîne et ayant une Tg de -65°C mesurée selon la norme ASTM D3418:2008, un taux de styrène de 16 % en poids par rapport au poids total du copolymère, un taux de butadiène 1,2 vinyl de 20 % en poids par rapport au poids total du copolymère, un taux de butadiène 1,4-trans de 39 % en poids par rapport au poids total du copolymère.
Elastomère (1F) : Copolymère styrène-butadiène porteur d'une fonction amino-alcoxysilane en milieu de chaîne et ayant une Tg de -48°C mesurée selon la norme ASTM D3418:2008, un taux de styrène de 27 % en poids par rapport au poids total du copolymère, un taux de butadiène 1,2 vinyl de 17,5 % en poids par rapport au poids du copolymère, un taux de butadiène 1,4-trans de 33,5 % en poids par rapport aux poids total du copolymère.
Elastomère (1G) : Copolymère styrène-butadiène non-fonctionnalisé et ayant une Tg de -48°C mesurée selon la norme ASTM D3418:2008, un taux de styrène de 27 % en poids par rapport au poids total du copolymère, un taux de butadiène 1,2 vinyl de 17,5 % en poids par rapport au poids total du copolymère, un taux de butadiène 1,4 de 33,5 % en poids par rapport au poids total du copolymère.

### Noir de carbone (2) : noir de carbone de grade ASTM N234 commercialisé par Cabot Corporation.

Silice (3) : Silice « Zeosil 1165MP » commercialisée par Solvay .
Silane (4) : Bis[3-(triéthoxysilyl)propyl] tétrasulfure silane (TESPT) commercialisé par Evonik sous la référence « Si69 ».
DPG (5) : Diphénylguanidine « Perkacit DPG » de la société Flexsys.
Plastifiant (6) : résine DCPD ayant un point de ramollissement de 100 °C, une température de transition vitreuse de 51°C commercialisée sous la référence « PR-383 » par Exxon Mobil.
Cire anti-ozone (7) : Cire anti-ozone « VARAZON 4959 » de la société Sasol Wax
Anti-oxydant (8) : N-1,3-diméthylbutyl-N-phenyl-para-phénylènediamine commercialisé par Flexys sous la référence « Santoflex 6-PPD.
ZnO (9) : Oxyde de Zinc (grade industriel) commercialisé par la société Umicore.

Acide stéarique (10) : Stéarine « Pristerene 4031 » commercialisée par la société Uniquema.

### 2. Essai 1 : Impact de la localisation des charges renforçantes dans la composition de caoutchouc

Les exemples présentés dans le tableau 1 ont pour but de comparer les différentes propriétés de caoutchouterie de la composition de caoutchouc CI1 conforme à l'invention à une série de compositions de caoutchouc comparatives CC1et CC2.

Le tableau 1 présente la formulation de ces compositions de caoutchouc ; les proportions sont exprimées en pce c'est-à-dire en partie en poids pour 100 parties en poids des élastomères de la composition.

**Tableau 1**

| | CC1 | CC2 | CI1 |
|---|---|---|---|
| Elastomère (1A) | 50,0 | 0,0 | 60,0 |
| Elastomère (1B) | 0,0 | 40,0 | 0,0 |
| Elastomère (1C) | 50,0 | 60,0 | 0,0 |
| Elastomère (1D) | 0,0 | 0,0 | 40,0 |
| Noir (2) | 3,8 | 3,8 | 3,8 |
| Silice (3) | 55,0 | 55,0 | 55,0 |
| Silane (4) | 4,4 | 4,4 | 4,4 |
| DPG (5) | 1,2 | 1,2 | 1,2 |
| Plastifiant (6) | 16,0 | 16,0 | 16,0 |
| Cire anti-ozone (7) | 2,0 | 2,0 | 2,0 |
| Anti-Oxydant (8) | 1,0 | 1,0 | 1,0 |
| ZnO (9) | 2,5 | 2,5 | 2,5 |
| Acide stéarique (10) | 2,0 | 2,0 | 2,0 |
| Soufre | 1,8 | 1,8 | 1,8 |
| CBS | 2,2 | 2,2 | 2,2 |

La composition de caoutchouc comparative CC1 est obtenue à partir de deux mélanges-maîtres, mélange-maître 1 et mélange -maitre 2, obtenus par mélangeage à sec selon le procédé suivant :
On introduit, dans un mélangeur interne « Polylab » de 414 cm³, rempli à 70 % en volume et dont la température initiale de cuve est de 90°C, en une ou plusieurs fois tous les ingrédients du tableau 2. On conduit, pendant 6 min, un travail thermomécanique jusqu'à atteindre une température maximale de tombée de 165°C. On récupère le mélange ainsi obtenu, appelée mélange-maître 1.

Dans un autre mélangeur interne « Polylab » de 414 cm³, rempli à 70 % en volume et dont la température initiale de cuve est de 90°C, on introduit en une ou plusieurs fois tous les ingrédients du tableau 3. On conduit, pendant 6 min, un travail thermomécanique jusqu'à atteindre une température maximale de tombée de 165°C. On récupère le mélange ainsi obtenu, appelée mélange-maître 2.

On introduit ensuite dans un mélangeur interne « Polylab » de 414 cm³, rempli à 70 % en volume le mélange-maître 1 et le mélange-maître 2 obtenus précédemment et on fournit un travail thermomécanique pendant une durée de 5 min jusqu'à atteindre une température maximale de tombée de 150°C.

On introduit ensuite le mélange de l'étape précédente dans un mélangeur externe, tel qu'un mélangeur à cylindre, de manière à refroidir ce mélange jusqu'à une température de 40°C. On incorpore alors le système de réticulation (1,8 pce de soufre et 2,2 pce de CBS (N-cyclohexyl-2-benzothiazyl-sulfénamide commercialisée par Flexys sous la référence « Santocure CBS ») et on mélange pendant 20 min. La composition de caoutchouc ainsi obtenue est ensuite calandrée sous la forme de plaques pour effectuer les mesures de ses propriétés physiques ou mécaniques. Sauf indications contraires, les propriétés de caoutchouterie de la composition de caoutchouc sont mesurées après cuisson à 170°C pendant 20 min.

**Tableau 2**

| | | |
|---|---|---|
| | Elastomère (1A) | 50,0 |
| | Noir (2) | 1,9 |
| | Silice (3) | 27,5 |
| | Silane (4) | 2,2 |
| mélange-maître 1-CC1 | DPG (5) | 0,6 |
| | Plastifiant (6) | 8,0 |
| | Cire anti-ozone (7) | 1,0 |
| | Anti-Oxydant (8) | 0,5 |
| | ZnO (9) | 1,3 |
| | Acide stéarique (10) | 1,00 |

**Tableau 3**

| | | |
|---|---|---|
| | Elastomère (1C) | 50,0 |
| | Noir (2) | 1,9 |
| | Silice (3) | 27,5 |
| | Silane (4) | 2,2 |
| mélange-maître 2-CC1 | DPG (5) | 0,6 |
| | Plastifiant (6) | 8,0 |
| | Cire anti-ozone (7) | 1,0 |
| | Anti-Oxydant (8) | 0,5 |
| | ZnO (9) | 1,2 |
| | Acide stéarique (10) | 1,0 |

On prépare la composition de caoutchouc comparative CC2 et la composition de caoutchouc de l'invention CI1 selon le procédé décrit pour la composition de caoutchouc CC1, avec respectivement les mélanges-maîtres 1 et 2 des tableaux 4 et 5 pour la composition comparative CC2 et les mélanges-maîtres 1 et 2 des tableaux 6 et 7 pour la composition de caoutchouc de l'invention CI1.

**Tableau 4**

| | | |
|---|---|---|
| | Elastomère (1B) | 40,0 |
| | Noir (2) | 3,8 |
| | Silice (3) | 39,7 |
| | Silane (4) | 3,2 |
| mélange-maître 1-CC2 | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

**Tableau 5**

| | | |
|---|---|---|
| | Elastomère (1C) | 60,0 |
| | Noir (2) | 0,0 |
| | Silice (3) | 15,3 |
| | Silane (4) | 1,2 |
| mélange-maître 2-CC2 | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

**Tableau 6**

| | | |
|---|---|---|
| | Elastomère (1A) | 60,0 |
| | Noir (2) | 0,0 |
| | Silice (3) | 15,3 |
| | Silane (4) | 1,2 |
| mélange-maître 1-CI1 | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

**Tableau 7**

| | | |
|---|---|---|
| | Elastomère (1D) | 40,0 |
| | Noir (2) | 3,8 |
| | Silice (3) | 39,7 |
| | Silane (4) | 3,2 |
| mélange-maître 2-CI1 | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

Les propriétés de caoutchouterie des compositions de caoutchouc CC1, CC2 et CI1, mesurées après cuisson, sont présentées dans le tableau 8.

**Tableau 8**

| | | CC1 | CC2 | CI1 |
|---|---|---|---|---|
| Température de transition vitreuse des élastomères (mesurée en °C) | TgE1 | -28°C | -24°C | -28°C |
| | TgE2 | -65°C | -65°C | -65°C |
| Tan δ_{max à 40°C} (en base 100) | | 100 | 98 | 116 |
| µₘₐₓ (en base 100) | | 100 | 86 | 105 |

Bien que présentant la même quantité de charges renforçantes (58,8pce) la composition de caoutchouc de l'invention CI1 se distingue des compositions de caoutchouc comparatives CC1 et CC2 en ce que les charges renforçantes, en particulier la silice, interagissent avec l'élastomère ayant la température de transition vitreuse la plus basse, c'est-à-dire avec l'élastomère de température de transition vitreuse TgE2. La composition de caoutchouc CC1 ne comprenant pas d'élastomère fonctionnalisé présente une répartition homogène des charges renforçantes entre les deux élastomères de température de transition vitreuse différente. Dans la composition de caoutchouc CC2, les charges renforçantes interagissent avec l'élastomère fonctionnalisé ayant la température de transition vitreuse la plus haute, c'est-à-dire avec l'élastomère de transition vitreuse TgE1.

Par rapport à la composition de caoutchouc comparative CC1 qui présente une répartition homogène de la charge renforçante dans la matrice élastomérique, la composition de caoutchouc CC2 présente, pour des propriétés d'hystérèse équivalentes (tan δₘₐₓ à _{40°C}), une diminution significative du coefficient µₘₐₓ, donc une diminution des performances d'adhérence sur sol mouillé. Ainsi, lorsque les charges renforçantes interagissent avec l'élastomère ayant une température de transition vitreuse la plus haute, en l'espèce TgE1 pour la composition de caoutchouc CC2, on observe donc une dégradation de la performance d'adhérence sur sol mouillé pour des propriétés d'hystérèse équivalentes à la composition de caoutchouc comparative CC1.

De manière surprenante, lorsque les charges renforçantes interagissent avec l'élastomère ayant la Tg la plus basse (en l'espèce l'élastomère fonctionnalisé ayant une température de transition vitreuse TgE2, voir la composition de caoutchouc selon l'invention CI1), on observe, par rapport à la composition de caoutchouc comparative CC1, une amélioration significative des propriétés d'hystérèse ainsi qu'une augmentation du coefficient µₘₐₓ, donc une amélioration de la performance d'adhérence sur sol mouillé. Ce résultat est surprenant car l'amélioration des propriétés d'hystérèse ne s'effectue pas au détriment de la performance de l'adhérence sur sol mouillé.

### 3. Essai 2 : Impact de la différence de température de transition vitreuse des élastomères formant la composition de caoutchouc

Les exemples présentés dans le tableau 9 ont pour but de comparer les différentes propriétés de caoutchouterie de la composition de caoutchouc CI1 conforme à l'invention par rapport à deux compositions de caoutchouc comparatives CC3 et CC4.

Le tableau 9 présente la formulation des compositions de caoutchouc testées, les proportions sont exprimées en pce c'est-à-dire en partie en poids pour 100 parties en poids des élastomères de la composition.

**Tableau 9**

| | CC3 | CC4 | CC1 |
|---|---|---|---|
| Elastomère (1A) | 60,0 | 0,0 | 60,0 |
| Elastomère (1D) | 0,0 | 40,0 | 40,0 |
| Elastomère (1F) | 40,0 | 0,0 | 0,0 |
| Elastomère (1G) | 0,0 | 60,0 | 0,0 |
| Noir (2) | 3,8 | 3,8 | 3,8 |
| Silice (3) | 55,0 | 55,0 | 55,0 |
| Silane (4) | 4,4 | 4,4 | 4,4 |
| DPG (5) | 1,2 | 1,2 | 1,2 |
| Plastifiant (6) | 16,0 | 16,0 | 16,0 |
| Cire anti-ozone (7) | 2,0 | 2,0 | 2,0 |
| Anti-Oxydant (8) | 1,0 | 1,0 | 1,0 |
| ZnO (9) | 2,5 | 2,5 | 2,5 |
| Acide stéarique (10) | 2,0 | 2,0 | 2,0 |
| Soufre | 1,8 | 1,8 | 1,8 |
| CBS | 2,2 | 2,2 | 2,2 |

On prépare la composition de caoutchouc CC3 et la composition de caoutchouc CC4 selon le procédé de l'essai 1, avec respectivement les mélanges-maîtres du tableau 6 (mélange-maître 1-CI1) et du tableau 10 (mélange-maître 2-CC3) pour la composition de caoutchouc CC3 et les mélanges-maître du tableau 11 (mélange-maître 1-CC4) et du tableau 7 (mélange-maître 2-CC1) pour la composition de caoutchouc CC4.

**Tableau 10**

| | | |
|---|---|---|
| | Elastomère (1F) | 40,0 |
| | Noir (2) | 3,8 |
| | Silice (3) | 39,7 |
| | Silane (4) | 3,2 |
| mélange-maître 2-CC3 | DPG (5) | 0,6 |
| | Plastifiant (6) | 9,4 |
| | Cire anti-ozone (7) | 1,0 |
| | Anti-Oxydant (8) | 0,5 |
| | ZnO (9) | 1,0 |
| | Acide stéarique (10) | 0,8 |

**Tableau 11**

| | | |
|---|---|---|
| | Elastomère (1G) | 60,0 |
| | Noir (2) | 0,0 |
| | Silice (3) | 15,3 |
| | Silane (4) | 1,2 |
| mélange-maître 1-CC4 | DPG (5) | 0,6 |
| | Plastifiant (6) | 6,6 |
| | Cire anti-ozone (7) | 1,0 |
| | Anti-Oxydant (8) | 0,5 |
| | ZnO (9) | 1,5 |
| | Acide stéarique (10) | 1,2 |

Les propriétés de caoutchouterie de ces compositions, mesurées après cuisson, sont présentées dans le tableau 12 et 13.

**Tableau 12**

| | | CC3 | CI1 |
|---|---|---|---|
| Température de transition vitreuse des élastomères (mesurée en °C) | TgE1 | -28°C | -28°C |
| | TgE2 | -48°C | -65°C |
| Tan δ_{max à 40°C} (en base 100) | | 100 | 117 |
| µₘₐₓ (en base 100) | | 100 | 100 |

La composition de caoutchouc selon l'invention CI1 diffère de la composition de caoutchouc comparative CC3 par l'élastomère de plus basse température de transition vitreuse (i.e. l'élastomère de température de transition vitreuse TgE2).

Lorsque l'on modifie la formulation de la composition comparative CC3 de manière à ce que la différence de température de transition vitreuse des élastomères soit supérieure ou égale à 23°C, on obtient la composition de caoutchouc selon l'invention CI1, alors on constate que les propriétés d'hystérèse sont significativement améliorées pour la composition de caoutchouc de l'invention CI1 par rapport à la composition comparative CC3.

De manière surprenante, cette amélioration des propriétés d'hystérèse de la composition de caoutchouc de l'invention CI1 ne s'effectue pas au détriment du coefficient µₘₐₓ, donc de la performance d'adhérence sur sol mouillé.

**Tableau 13**

| | | CC4 | CI1 |
|---|---|---|---|
| Température de transition vitreuse des élastomères (mesurée en °C) | TgE1 | -48°C | -28°C |
| | TgE2 | -65°C | -65°C |
| Tan δ _{max à 40°C} (en base 100) | | 100 | 98 |
| µₘₐₓ (en base 100) | | 100 | 119 |

La composition de caoutchouc selon l'invention CI1 diffère de la composition de caoutchouc comparative CC4 par l'élastomère de plus haute température de transition vitreuse (i.e. l'élastomère de température de transition vitreuse TgE1).

Lorsque l'on modifie la formulation de la composition comparative CC4 de manière à ce que la différence de température de transition vitreuse des élastomères soit supérieure ou égale à 23°C, on obtient la composition de caoutchouc selon l'invention CI1, alors on constate que le coefficient µₘₐₓ est significativement amélioré par rapport à la composition CC4. La composition de caoutchouc de l'invention présente donc une performance d'adhérence sur sol mouillé supérieure à celle de la composition de caoutchouc comparative CC4. De manière surprenante, l'amélioration de la performance d'adhérence sur sol mouillé, ne s'effectue pas au détriment des propriétés d'hystérèse, qui sont équivalentes à celles de la composition de caoutchouc comparative CC4.

### 4. Essai 3 : Comparaison avec un art antérieur

Les exemples présentés dans le tableau 14 ont pour but de comparer les différentes propriétés de caoutchouterie de la composition de caoutchouc CI1 conforme à l'invention par rapport à une composition de caoutchouc comparative CC5 représentatif de l'exemple 4 du document EP3372638A1
La formulation de la composition de caoutchouc CC5 est présentée dans le tableau 14, les proportions sont exprimées en pce.

**Tableau 14**

| | CC5 | CI1 |
|---|---|---|
| Elastomère (1F) | 50,0 | 0,0 |
| Elastomère (1D) | 50,0 | 40,0 |
| Elastomère (1A) | 0,0 | 60,0 |
| Noir (2) | 3,8 | 3,8 |
| Silice (3) | 55,0 | 55,0 |
| Silane (4) | 4,4 | 4,4 |
| DPG (5) | 1,2 | 1,2 |
| Plastifiant (6) | 16,0 | 16,0 |
| Cire anti-ozone (7) | 2,0 | 2,0 |
| Anti-Oxydant (8) | 1,0 | 1,0 |
| ZnO (9) | 2,5 | 2,5 |
| Acide stéarique (10) | 2,0 | 2,0 |
| Soufre | 1,8 | 1,8 |

On prépare la composition de caoutchouc CC5 suivant le procédé de l'essai 1 avec respectivement les mélanges-maîtres des tableaux 15 et 16.

**Tableau 15**

| | | |
|---|---|---|
| | Elastomère (1F) | 50,0 |
| | Noir (2) | 1,9 |
| | Silice (3) | 0,0 |
| | Silane (4) | 0,0 |
| mélange-maître 1-CC5 | DPG (5) | 0,6 |
| | Plastifiant (6) | 0,0 |
| | Cire anti-ozone (7) | 1,0 |
| | Anti-Oxydant (8) | 0,5 |
| | ZnO (9) | 1,3 |
| | Acide stéarique (10) | 1,0 |

**Tableau 16**

| | | |
|---|---|---|
| | Elastomère (1D) | 50,0 |
| | Noir (2) | 1,9 |
| | Silice (3) | *55,0* |
| | Silane (4) | 4,4 |
| mélange-maître 2-CC5 | DPG (5) | 0,6 |
| | Plastifiant (6) | 16,0 |
| | Cire anti-ozone (7) | 1,0 |
| | Anti-Oxydant (8) | 0,5 |
| | ZnO (9) | 1,2 |
| | Acide stéarique (10) | 1,0 |

Les propriétés de caoutchouterie des compositions de caoutchouc, mesurées après cuisson, sont présentées dans le tableau 17.

**Tableau 17**

| | | CC5 | CI1 |
|---|---|---|---|
| Température de transition vitreuse des élastomères (mesurée en °C) | TgE1 | -48°C | -28°C |
| | TgE2 | -65°C | -65°C |
| Tan δ_{max à 40°C} (en base 100) | | 100 | 99 |
| µₘₐₓ (en base 100) | | 100 | 127 |

On constate que la composition de caoutchouc selon l'invention CI1, présente un coefficient µₘₐₓ significativement amélioré par rapport à la composition de caoutchouc CC5 représentative d'un art antérieur. Ce résultat indique que l'adhérence sur sol mouillé de la composition de caoutchouc selon l'invention CI1 est significativement meilleure que l'adhérence sur sol mouillé de la composition de caoutchouc CC5. De manière surprenante, cette amélioration significative de coefficient µₘₐₓ ne s'effectue pas au détriment des propriétés d'hystérèse puis que les deux compositions de caoutchouc présentent les mêmes valeurs de δₘₐₓ à _{40°C}.

L'ensemble des essais ci-dessus présentés montrent que la composition de caoutchouc selon l'invention MI1 présente une amélioration significative des propriétés d'hystérèse, donc une diminution de la résistance au roulement, tout en conservant une très bonne performance d'adhérence sur sol mouillé par rapport aux compositions de caoutchouc comparatives.

## Revendications

1. Composition de caoutchouc à base d'au moins un premier élastomère diénique E1 non-fonctionnalisé ayant une température de transition vitreuse TgE1, un second élastomère diénique E2 fonctionnalisé présentant une température de transition vitreuse TgE2, une charge renforçante capable d'interagir avec l'élastomère diénique E2 fonctionnalisé et un système de réticulation, dans laquelle :
- la température de transition vitreuse TgE1 est supérieure ou égale à -50°C,
- la température de transition vitreuse TgE2 satisfait la relation mathématique TgE2 ≤ TgE1 - 23°C, et
- le taux de l'élastomère diénique E1 non fonctionnalisé est compris dans un domaine allant de 50 pce à 70 pce, et où les températures de transition vitreuse TgE1 et TgE2 sont déterminées à l'aide d'un calorimètre différentiel selon la norme ASTM D3418:2008.

2. Composition de caoutchouc selon la revendication 1, dans laquelle la température de transition vitreuse TgE2 satisfait la relation mathématique TgE2 ≤ TgE1 - 28°C, plus préférentiellement TgE2 ≤ TgE1 - 30°C.

3. Composition de caoutchouc selon l'une quelconque des revendications précédentes, dans laquelle la température de transition vitreuse TgE2 satisfait la relation mathématique TgE2 ≥ TgE1 - 65°C, plus préférentiellement TgE2 ≥ TgE1 - 50°C, plus préférentiellement encore TgE2 ≥ TgE1 - 45°C.

4. Composition de caoutchouc selon l'une quelconque des revendications précédentes, dans laquelle la température de transition vitreuse TgE2 est comprise dans un domaine allant de - 110°C à -23°C, de préférence allant de -100°C à -28°C, plus préférentiellement allant de -95°C à -30°C.

5. Composition de caoutchouc selon l'une quelconque des revendications précédentes, dans laquelle l'élastomère diénique E2 fonctionnalisé est choisi dans le groupe constitué le caoutchouc naturel, les polyisoprènes de synthèse, les polybutadiènes, les copolymères d'isobutène et d'isoprène, les copolymères de butadiène et de styrène, les copolymères de butadiène et d'isoprène, les copolymères d'isoprène et de styrène et les copolymères de butadiène-styrène-isoprène.

6. Composition de caoutchouc selon l'une quelconque des revendications précédentes, dans laquelle l'élastomère diénique E2 fonctionnalisé est choisi parmi les polybutadiènes et les copolymères de styrène et de butadiène.

7. Composition de caoutchouc selon l'une quelconque des revendications précédentes, dans laquelle l'élastomère diénique E2 fonctionnalisé comprend au moins une fonction chimique apte à interagir avec la charge renforçante, la fonction chimique comprenant au moins un hétéroatome choisi dans le groupe constitué par l'azote, le soufre, l'oxygène, le phosphore, l'étain et le silicium ; de préférence la fonction chimique apte à interagir avec la charge renforçante est une fonction polaire comprenant au moins un atome d'oxygène.

8. Composition de caoutchouc selon l'une quelconque des revendications précédentes, dans laquelle la température de transition vitreuse TgE1 est comprise dans un domaine allant de - 50°C à 0°C, plus préférentiellement de -40°C à 0°C, plus préférentiellement de -30°C à 0°C.

9. Composition de caoutchouc selon l'une quelconque des revendications précédentes, dans laquelle le taux l'élastomère diénique E1 est compris dans un domaine allant de 55 pce à 70 pce, plus préférentiellement de 55 pce à 65 pce.

10. Composition de caoutchouc selon l'une quelconque des revendications précédentes, dans laquelle l'élastomère diénique E1 non-fonctionnalisé est choisi dans le groupe constitué par les polyisoprènes de synthèse, les polybutadiènes, les copolymères de butadiène et de styrène, les copolymères de butadiène et d'isoprène, les copolymères d'isoprène-styrène et les copolymères de butadiène-styrène-isoprène.

11. Composition de caoutchouc selon l'une quelconque des revendications précédentes, dans laquelle l'élastomère diénique E1 non-fonctionnalisé est choisi parmi les polybutadiènes et les copolymères de styrène et de butadiène.

12. Composition de caoutchouc selon l'une quelconque des revendications précédentes, dans laquelle le taux de la charge renforçante est compris dans un domaine allant de 20 à 100 pce, de préférence allant de 30 à 90 pce, plus préférentiellement encore allant de 40 à 90 pce.

13. Composition de caoutchouc selon l'une quelconque des revendications précédentes, dans laquelle la charge renforçante comprend majoritairement au moins une charge renforçante inorganique, plus préférentiellement encore comprend majoritairement au moins une silice.

14. Composition de caoutchouc selon l'une quelconque des revendications précédentes, dans laquelle le taux de l'élastomère diénique E2 fonctionnalisé est compris dans un domaine allant 30 pce à 50 pce, de préférence de 30 pce à 45 pce, plus préférentiellement de 35 pce à 45 pce.

15. Bande de roulement comprenant au moins une composition définie selon l'une quelconque des revendications 1 à 14.

16. Bandage pneumatique ou non pneumatique comprenant au moins une composition définie selon l'une quelconque des revendications 1 à 14 ou une bande de roulement selon la revendication 15.

## Patentansprüche

1. Kautschukzusammensetzung auf Basis mindestens eines nicht funktionalisierten ersten Dien-Elastomers E1 mit einer Glasübergangstemperatur TgE1, eines funktionalisierten zweiten Dien-Elastomers E2, das eine Glasübergangstemperatur TgE2 aufweist, eines verstärkenden Füllstoffs, der in der Lage ist, mit dem funktionalisierten Dien-Elastomer E2 zu interagieren, und eines Vernetzungssystems, wobei:
- die Glasübergangstemperatur TgE1 größer oder gleich -50 °C ist;
- die Glasübergangstemperatur TgE2 die mathematische Gleichung TgE2 ≤ TgE1 - 23 °C erfüllt, und
- der Gehalt des nicht funktionalisierten Dien-Elastomers E1 in einem Bereich von 50 phr bis 70 phr liegt und wobei die Glasübergangstemperaturen TgE1 und TgE2 mit Hilfe eines Differenzkalorimeters gemäß der Norm ASTM D3418:2008 bestimmt werden.

2. Kautschukzusammensetzung nach Anspruch 1, wobei die Glasübergangstemperatur TgE2 die mathematische Gleichung TgE2 ≤ TgE1 - 28 °C, noch bevorzugter TgE2 ≤ TgE1 - 30 °C erfüllt.

3. Kautschukzusammensetzung nach einem der vorhergehenden Ansprüche, wobei die Glasübergangstemperatur TgE2 die mathematische Gleichung TgE2 ≥ TgE1 - 65 °C, noch bevorzugter TgE2 ≥ TgE1 - 50 °C, noch stärker bevorzugt TgE2 ≥ TgE1 - 45 °C erfüllt.

4. Kautschukzusammensetzung nach einem der vorhergehenden Ansprüche, wobei die Glasübergangstemperatur TgE2 in einem Bereich von -110 °C bis -23 °C, bevorzugt von -100 °C bis -28 °C und noch bevorzugter von -95 °C bis -30 °C liegt.

5. Kautschukzusammensetzung nach einem der vorhergehenden Ansprüche, wobei das funktionalisierte Dien-Elastomer E2 aus der Gruppe bestehend aus Naturkautschuk, synthetischen Polyisoprenen, Polybutadienen, Isobuten-Isopren-Copolymeren, Butadien-Styrol-Copolymeren, Butadien-Isopren-Copolymeren, Isopren-Styrol-Copolymeren und Butadien-Styrol-Isopren-Copolymeren ausgewählt ist.

6. Kautschukzusammensetzung nach einem der vorhergehenden Ansprüche, wobei das funktionalisierte Dien-Elastomer E2 aus Polybutadienen und Styrol-Butadien-Copolymeren ausgewählt ist.

7. Kautschukzusammensetzung nach einem der vorhergehenden Ansprüche, wobei das funktionalisierte Dien-Elastomer E2 mindestens eine chemische Funktion umfasst, die geeignet ist, mit dem verstärkenden Füllstoff zu interagieren, wobei die chemische Funktion mindestens ein Heteroatom umfasst, das aus der Gruppe bestehend aus Stickstoff, Schwefel, Sauerstoff, Phosphor, Zinn und Silizium ausgewählt ist; wobei die chemische Funktion, die geeignet ist, mit dem verstärkenden Füllstoff zu interagieren, bevorzugt eine polare Funktion ist, die mindestens ein Sauerstoffatom umfasst.

8. Kautschukzusammensetzung nach einem der vorhergehenden Ansprüche, wobei die Glasübergangstemperatur TgE1 in einem Bereich von -50 °C bis 0 °C, noch bevorzugter von -40 °C bis 0 °C, noch bevorzugter von -30 °C bis 0 °C liegt.

9. Kautschukzusammensetzung nach einem der vorhergehenden Ansprüche, wobei der Gehalt des Dien-Elastomers E1 in einem Bereich von 55 phr bis 70 phr, noch bevorzugter von 55 phr bis 65 phr liegt.

10. Kautschukzusammensetzung nach einem der vorhergehenden Ansprüche, wobei das nicht funktionalisierte Dien-Elastomer E1 aus der Gruppe bestehend aus synthetischen Polyisoprenen, Polybutadienen, Butadien-Styrol-Copolymeren, Butadien-Isopren-Copolymeren, Isopren-Styrol-Copolymeren und Butadien-Styrol-Isopren-Copolymeren ausgewählt ist.

11. Kautschukzusammensetzung nach einem der vorhergehenden Ansprüche, wobei das nicht funktionalisierte Dien-Elastomer E1 aus Polybutadienen und Styrol-Butadien-Copolymeren ausgewählt ist.

12. Kautschukzusammensetzung nach einem der vorhergehenden Ansprüche, wobei der Gehalt des verstärkenden Füllstoffs in einem Bereich von 20 bis 100 phr, bevorzugt von 30 bis 90 phr, noch bevorzugter von 40 bis 90 phr liegt.

13. Kautschukzusammensetzung nach einem der vorhergehenden Ansprüche, wobei der verstärkende Füllstoff überwiegend mindestens einen anorganischen verstärkenden Füllstoff umfasst, noch bevorzugter überwiegend mindestens eine Kieselsäure umfasst.

14. Kautschukzusammensetzung nach einem der vorhergehenden Ansprüche, wobei der Gehalt des funktionalisierten Dien-Elastomers E2 in einem Bereich von 30 phr bis 50 phr, bevorzugt von 30 phr bis 45 phr, noch bevorzugter von 35 phr bis 45 phr liegt.

15. Laufstreifen, umfassend mindestens eine Zusammensetzung nach einem der Ansprüche 1 bis 14.

16. Luftreifen oder luftloser Reifen, umfassend mindestens eine Zusammensetzung nach einem der Ansprüche 1 bis 14 oder einen Laufstreifen nach Anspruch 15.

## Claims

1. Rubber composition based on at least one non-functionalized first diene elastomer E1 having a glass transition temperature TgE1, one functionalized second diene elastomer E2 having a glass transition temperature TgE2, a reinforcing filler capable of interacting with the functionalized diene elastomer E2 and a crosslinking system, in which:
- the glass transition temperature TgE1 is above or equal to -50°C,
- the glass transition temperature TgE2 satisfies the mathematical relationship TgE2 ≤ TgE1-23°C, and
- the content of the non-functionalized diene elastomer E1 is within a range extending from 50 phr to 70 phr, and the glass transition temperatures TgE1 and TgE2 are determined using a differential calorimeter according to ASTM D3418:2008.

2. Rubber composition according to Claim 1, in which the glass transition temperature TgE2 satisfies the mathematical relationship TgE2 ≤ TgE1-28°C, more preferentially TgE2 ≤ TgEl-30°C.

3. Rubber composition according to either one of the preceding claims, in which the glass transition temperature TgE2 satisfies the mathematical relationship TgE2 ≥ TgE1-65°C, more preferentially TgE2 ≥ TgEl-50°C, more preferentially still TgE2 ≥ TgE1-45°C.

4. Rubber composition according to any one of the preceding claims, in which the glass transition temperature TgE2 is within a range extending from -110°C to -23°C, preferably extending from -100°C to -28°C, more preferentially extending from -95°C to -30°C.

5. Rubber composition according to any one of the preceding claims, in which the functionalized diene elastomer E2 is selected from the group consisting of natural rubber, synthetic polyisoprenes, polybutadienes, isobutene/isoprene copolymers, butadiene/styrene copolymers, butadiene/isoprene copolymers, isoprene/styrene copolymers and butadiene/styrene/isoprene copolymers.

6. Rubber composition according to any one of the preceding claims, in which the functionalized diene elastomer E2 is selected from polybutadienes and butadiene/styrene copolymers.

7. Rubber composition according to any one of the preceding claims, in which the functionalized diene elastomer E2 comprises at least one chemical function capable of interacting with the reinforcing filler, the chemical function comprising at least one heteroatom selected from the group consisting of nitrogen, sulfur, oxygen, phosphorus, tin and silicon; preferably the chemical function capable of interacting with the reinforcing filler is a polar function comprising at least one oxygen atom.

8. Rubber composition according to any one of the preceding claims, in which the glass transition temperature TgE1 is within a range extending from -50°C to 0°C, more preferentially from -40°C to 0°C, more preferentially from -30°C to 0°C.

9. Rubber composition according to any one of the preceding claims, in which the content of the diene elastomer E1 is within a range extending from 55 phr to 70 phr, more preferentially from 55 phr to 65 phr.

10. Rubber composition according to any one of the preceding claims, in which the non-functionalized diene elastomer E1 is selected from the group consisting of synthetic polyisoprenes, polybutadienes, butadiene/styrene copolymers, butadiene/isoprene copolymers, isoprene/styrene copolymers and butadiene/styrene/isoprene copolymers.

11. Rubber composition according to any one of the preceding claims, in which the non-functionalized diene elastomer E1 is selected from polybutadienes and styrene/butadiene copolymers.

12. Rubber composition according to any one of the preceding claims, in which the content of the reinforcing filler is within a range extending from 20 to 100 phr, preferably extending from 30 to 90 phr, more preferentially still extending from 40 to 90 phr.

13. Rubber composition according to any one of the preceding claims, in which the reinforcing filler predominantly comprises at least one inorganic reinforcing filler, more preferentially still predominantly comprises at least one silica.

14. Rubber composition according to any one of the preceding claims, in which the content of the functionalized diene elastomer E2 is within a range extending from 30 phr to 50 phr, preferably from 30 phr to 45 phr, more preferentially from 35 phr to 45 phr.

15. Tread comprising at least one composition defined according to any one of Claims 1 to 14.

16. Pneumatic or non-pneumatic tyre comprising at least one composition defined according to any one of Claims 1 to 14 or a tread according to Claim 15.
